# EUROPEAN PATENT APPLICATION

(11) **EP 1 703 316 A1**
(43) Date of publication of application: **20.09.2006**
(21) Application number: 06005368.3
(22) Date of filing: 16.03.2006
(51) Int. Cl.: G02F 1/13363, G02B 27/28, H04N 9/31, G02F 1/1335

(54) **Optical beam splitting element and projector comprising such an element**

(30) Priority: 17.03.2005 JP 2005076858; 15.09.2005 JP 2005268119
(71) Applicant: SEIKO EPSON CORPORATION, Shinjuku-ku, Tokyo 163-0811 (JP)
(72) Inventor: Hara, Kazuhiro, Suwa-shi Nagano-ken 392-8502 (JP); Uehara, Takehiko, Suwa-shi Nagano-ken 392-8502 (JP); Mukaiyama, Hiroyuki, Suwa-shi Nagano-ken 392-8502 (JP)
(74) Representative: HOFFMANN EITLE

(57) **Abstract**

An optical part (1) is provided on a light emission side of a light modulating device (4). The light modulating device includes: a pair of substrates (51,52) which are opposite to each other; liquid crystal (53) which is injected between the substrates; pixel electrodes (56) which are arranged in a matrix on one of the pair of substrates opposite to each other; and a black matrix (55) that includes transmissive portions which are arranged on the other substrate so as to correspond to the pixel electrodes and lattice-shaped light shielding portions, each having sides substantially orthogonal to each other, which cover portions other than the pixel electrodes. The optical part includes: a first optical element (11) which converts linearly polarized light emitted from the light modulating device into circularly polarized light; a first birefringence plate (12) which has an optical axis (121) arranged along one side of each of the lattice-shaped light shielding portions forming the black matrix of the light modulating device; a second optical element (13) which converts a normal light beam and an abnormal light beam emitted from the first birefringence plate into circularly polarized light beams; and a second birefringence plate (14) on which the light beams emitted from the second optical element are incident and which has an optical axis (141) substantially orthogonal to that of the first birefringence plate. In addition, the first optical element, the first birefringence plate, the second optical element, and the second birefringence plate are arranged in this order on the light emission side of the light modulating device.

## Description

### BACKGROUND

### 1. Technical Field

The present invention relates to an optical part and a projector.

### 2. Related Art

In recent years, optical apparatuses using light modulating devices have been used. For example, a projector has been used in which light beams emitted from a light source are modulated according to image information and an optical image is enlarged and projected.

The light modulating device provided in the optical apparatus includes a pair of substrates opposite to each other and liquid crystal injected between the substrates. One of the pair of substrates is provided with a plurality of scanning lines and a plurality of data lines which are arranged in a matrix, switching elements, such as transistors, which are connected to the scanning lines and the data lines, pixel electrodes which are connected to the switching elements. In addition, the other substrate is provided with a black matrix which includes transmissive portions arranged in a matrix so as to correspond to the pixel electrodes and lattice-shaped light shielding portions, each having two sides substantially orthogonal to each other, which cover portions other than the pixel electrodes.

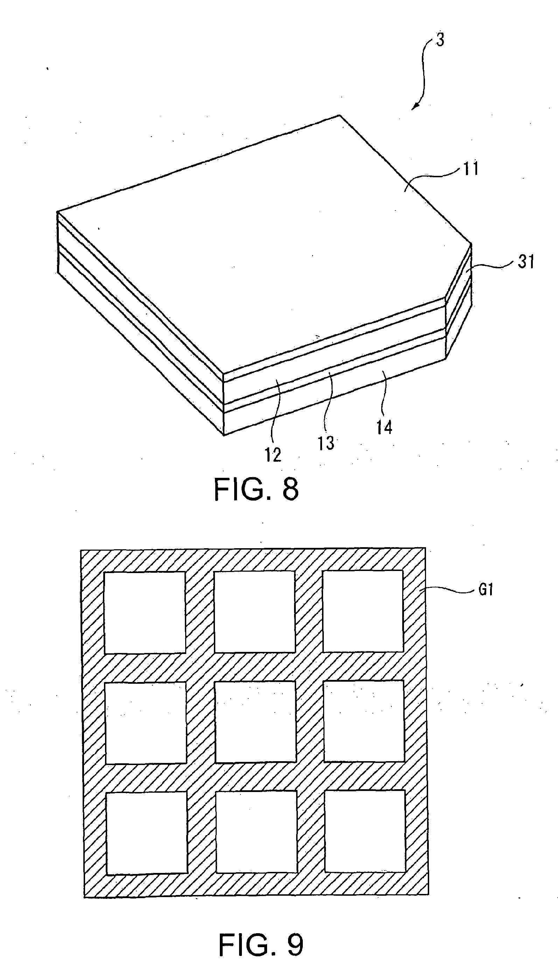

In the projector provided with the light modulating device having such a structure, when the light beams emitted from the light modulating device are enlarged by a projection lens, the black matrix having the transmissive portions arranged in a matrix causes a projected image G1 to have a mosaic appearance, as shown in Fig. 9, which results in the deterioration of the projected image.

Therefore, a method has been proposed in arranging an optical part 100 including a pair of birefringence plates 101 and 102 and a quarter-wave plate 103 interposed between the pair of birefringence plates 101 and 102 in the subsequent stage of the light modulating device, as shown in Fig. 10 (for example, see JP-B-64-3834 (page No. 7)). In addition, Fig. 10 is an exploded perspective view illustrating the optical part 100 and the separated state of light beams passing through the optical part 100.

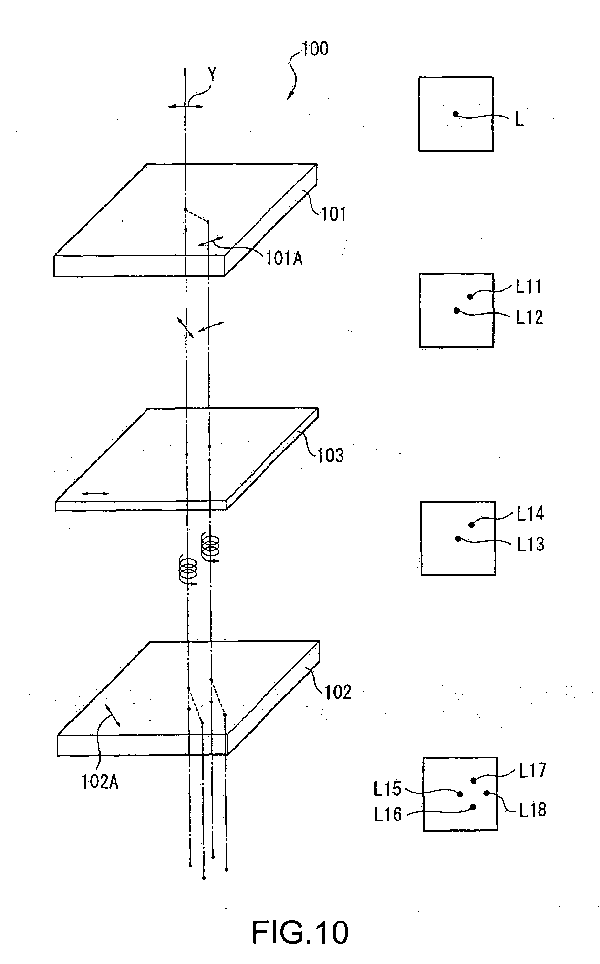

Light emitted from the light modulating device (light incident on the optical part 100) is linearly polarized light which oscillates along one side of each of the lattice-shaped light shielding portions of the black matrix or in a direction orthogonal to the side (in a direction of arrow Y in Fig. 10). Therefore, in the optical part 100, light L emitted from the light modulating device is separated into an abnormal light beam L11 and a normal light beam L12 by the first birefringence plate 101 having an optical axis inclined at an angle of 45° with respect to the oscillating direction of the incident light (that is, inclined at an angle of 45° with respect to the side of each of the lattice-shaped light shielding portions of the black matrix (in a direction of arrow 101A in Fig. 10)). Then, the two separated light beams L11 and L12 pass through the quarter-wave plate to be converted into circularly polarized light beams L13 and L14. Subsequently, the two light beams L13 and L14 are separated into four light beams L15, L16, L17, and L18 by the second birefringence plate 102 having an optical axis inclined at an angle of -45° (that is, inclined orthogonal to the optical axis of the first birefringence plate (in a direction of arrow 102 in Fig. 10)).

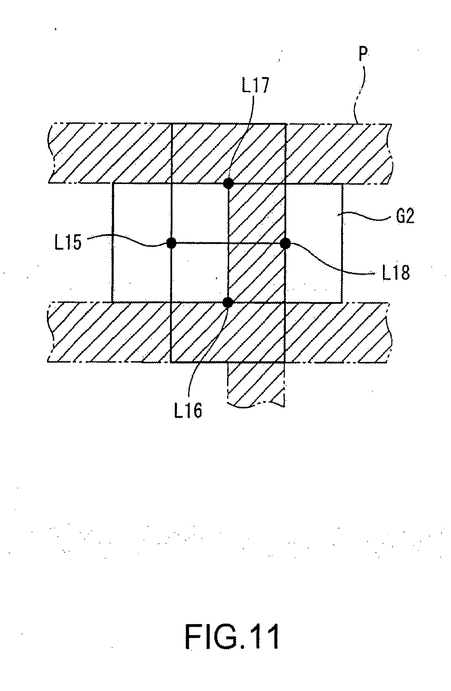

In this way, light emitted through the transmissive portions of the black matrix of the light modulating device is separated into the four light beams L15, L16, L17, and L18 to form a projected image G2 which causes an image P of the light shielding portion of the black matrix to disappear, as shown in Fig. 11.

However, in the above-mentioned method, since the birefringence plates 101 and 102 respectively having optical axes of 45° and -45° are used to separate light beams emitted from the transmissive portions of the black matrix of the light modulating device, an image G2 shown in Fig. 11 is formed by the light beams emitted from the transmissive portions of the black matrix of the light modulating device. That is, some of the light beams emitted from the transmissive portions of the black matrix are separated in a direction inclined at an angle of 45° with respect to one side of each of the lattice-shaped light shielding portions of the black matrix to generate four light beams L15, L16, L17, and L18, and the four separated light beams L15, L16, L17, and L18 are arranged at vertexes of a rhombus (rhombic separation).

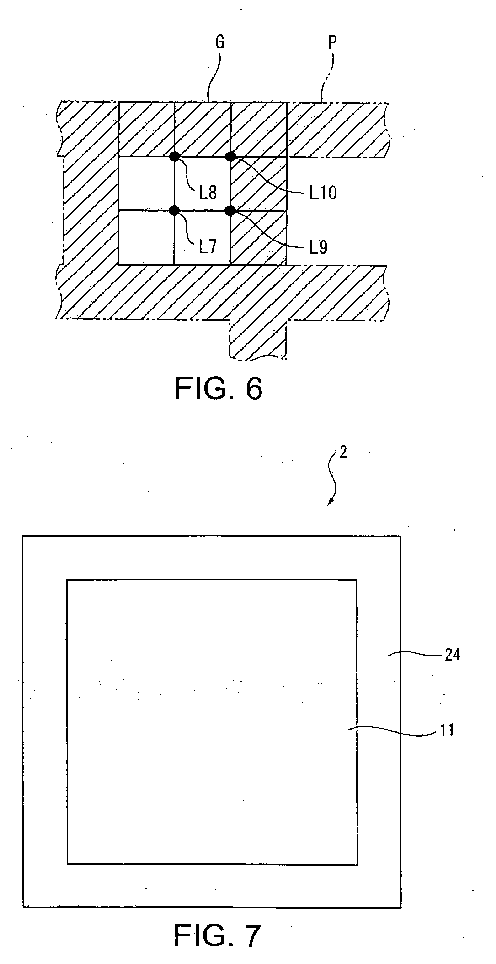

However, when the optical part separates light emitted from the transmissive portions of the black matrix of the light modulating device into a plurality of light beams and images formed by the separated light beams overlap each other as shown in Fig. 6, a viewer can see a clear image projected on the screen by the projector (see the image G shown in Fig. 6). That is, when light emitted from the transmissive portions of the black matrix is separated into four light beams along two sides, which are opposite to each other, of each of the lattice-shaped light shielding portions of the black matrix, and the four separated light beams are arranged at vertexes of a square or a rectangle (square separation), an image formed by the light beams appears to be clear.

### SUMMARY

An advantage of some aspects of the invention is that it provides an optical part capable of improving the appearance of an image formed by light modulating devices and a projector equipped with the optical part.

According to an aspect of the invention, there is provided an optical part that is provided on a light emission side of a light modulating device. The light modulating device includes a pair of substrates which are opposite to each other; liquid crystal which is injected between the substrates; pixel electrodes which are arranged in a matrix on one of the pair of substrates opposite to each other; and a black matrix that includes transmissive portions which are arranged on the other substrate so as to correspond to the pixel electrodes and lattice-shaped light shielding portions, each having sides substantially orthogonal to each other, which cover portions other than the pixel electrodes. The optical part includes: a first optical element which converts linearly polarized light emitted from the light modulating device into circularly polarized light; a first birefringence plate which has an optical axis arranged along one side of each of the lattice-shaped light shielding portions forming the black matrix of the light modulating device; a second optical element which converts a normal light beam and an abnormal light beam emitted from the first birefringence plate into circularly polarized light beams; and a second birefringence plate on which the light beams emitted from the second optical element are incident and which has an optical axis substantially orthogonal to that of the first birefringence plate. In addition, the first optical element, the first birefringence plate, the second optical element, and the second birefringence plate are arranged in this order on the light emission side of the light modulating device.

In the above-mentioned structure, linearly polarized light emitted from the light modulating device is converted into circularly polarized light by the first optical element. The circular polarization makes it possible for the first birefringence plate having an optical axis aligned along one side of each of the lattice-shaped light shielding portions of the black matrix to separate the light emitted from the light modulating device into a normal light beam and an abnormal light beam. In this case, the normal light beam and the abnormal light beam are separated along one side of each of the lattice-shaped light shielding portions of the black matrix. Then, the two separated light beams are converted into circularly polarized light beams by the second optical element, and the circularly polarized light beams are separated by the second birefringence plate having an optical axis orthogonal to that of the first birefringence plate. In this way, the two circularly polarized light beams are separated in a direction orthogonal to the direction in which the light beams are separated by the first birefringence plate, that is, along another side substantially perpendicular to the one side of each of the lattice-shaped light shielding portions of the black matrix.

Further, in the above-mentioned structure, the optical part separates a light beam emitted through the transmissive portions of the black matrix into four light beams along two sides, which are orthogonal to each other, of each of the lattice-shaped light shielding portions of the black matrix. Therefore, the separated light beams are arranged at vertexes of a square or rectangle formed by the sides, which are orthogonal to each other, of each of the lattice-shaped light shielding portions of the black matrix. In this way, it is possible to improve the appearance of an image formed through the light modulating device. In addition, the light beams emitted through the transmissive portions of the black matrix are separated into four light beams along two sides, which are orthogonal to each other, of each of the lattice-shaped light shielding portions of the black matrix, and the light beams are radiated onto an image formed by the light shielding portions of the black matrix. Therefore, the image formed by the light shielding portions of the black matrix disappears from the image formed by the optical part.

In the above-mentioned structure, it is preferable that the deviation width between the normal light beam and the abnormal light beam in the first birefringence plate and the second birefringence plate be larger than one-third of an image pitch and smaller than two-thirds thereof. However, the deviation width may be set to correspond to the width of each side of the light shielding portion of the black matrix (width in a direction orthogonal to the longitudinal direction of the side). In addition, the separated light beams may be radiated onto the image formed by the light shielding portions of the black matrix.

Further, in the optical part according to this aspect, it is preferable that the first optical element and the second optical element be plastic retardation films.

According to this structure, the optical elements are composed of plastic films, which makes it possible to reduce the thickness of an optical part.

Furthermore, in the optical part according to this aspect, preferably, the retardation films have a wavelength dispersion characteristic in which, as the wavelength of light incident on the retardation film becomes larger, a phase difference becomes larger.

According to this structure, the retardation films have the wavelength dispersion characteristic in which, as the wavelength of light incident on the retardation film becomes larger, a phase difference becomes larger. Therefore, it is possible to convert linearly polarized incident light into circularly polarized light over a wide wavelength range.

Moreover, in the optical part according to this aspect, it is preferable that the retardation films and the birefringence plates be bonded to each other by an acryl-based adhesive.

According to this structure, since the plastic retardation films and the birefringence plates are bonded to each other by the acryl-based adhesive, the adhesive can absorb distortion caused by differences among linear expansion coefficients of the retardation films and the birefringence plates, which makes it possible to achieve an optical part having high durability.

Further, according to this structure, the use of the acryl-based adhesive makes it possible to prevent the transmittance of light passing through the optical part from being lowered.

Furthermore, in the optical part according to this aspect, it is preferable that the refractive index of the acryl-based adhesive be larger than 1.48 and smaller than the refractive indexes of the retardation films.

According to this structure, the retardation films and the birefringence plates forming the optical part are bonded to each other by the acryl-based adhesive having a refractive index larger than 1.48. Therefore, it is possible to prevent light beams which are incident on the optical part to form an optical image from being reflected from interfaces among the retardation films and the birefringence plates. Thus, little reflected light is incident on the optical device and is then reflected therefrom, which makes it possible to prevent ghosting from occurring in a projected image. In addition, it is preferable that the refractive index of the acryl-based adhesive be close to the refractive indexes of the retardation films and the birefringence plates, which makes it possible to decrease the value of reflectance at the interfaces among the optical elements forming the optical part. Further, it is preferable that the refractive index of the acryl-based adhesive does not exceed the refractive indexes of the retardation films. When the refractive index of the acryl-based adhesive is larger than the refractive indexes of the retardation films, the reflectance at the interfaces increases.

According to another aspect of the invention, a projector includes: a plurality of light modulating devices which modulate light beams emitted from a light source device, according to image information of each colored light, and each of which includes pixel electrodes arranged in a matrix and a black matrix that has transmissive portions arranged so as to correspond to the pixel electrodes and lattice-shaped light shielding portions, each having sides substantially orthogonal to each other, which cover portions other than the pixel electrodes; a color combining optical device which combines the light beams modulated by the light modulating devices; and a projection optical device which enlarges and projects a colored light combined by the color combining optical device to form a projected image. In the projector, the above-mentioned optical part is provided between the light modulating devices and the projection optical device.

According to this structure, since the projector includes the above-mentioned optical part, it is possible to improve the appearance of a projected image.

### BRIEF DESCRIPTION OF THE DRAWINGS

The invention will be described with reference to the accompanying drawings, wherein like numbers reference like elements.

Fig. 1 is a diagram illustrating an optical system of a projector according to an embodiment of the invention.

Fig. 2 is a perspective view illustrating a liquid crystal panel of the projector.

Fig. 3 is a cross-sectional view of an optical part according to the invention.

Fig. 4 is a diagram illustrating the optical part and light beams passing through the optical part.

Fig. 5 is a graph illustrating the birefringence of a retardation film of the optical part.

Fig. 6 is a diagram illustrating an image projected through the optical part.

Fig. 7 is a plan view illustrating a modification of the optical part.

Fig. 8 is a plan view illustrating another modification of the optical part.

Fig. 9 is a diagram illustrating an optical image emitted from a light modulating device.

Fig. 10 is a diagram illustrating light beams passing through a conventional optical part.

Fig. 11 is a diagram illustrating an image projected through the conventional optical part.

### DESCRIPTION OF EXEMPLARY EMBODIMENTS

Hereinafter, preferred embodiments of the invention will be described with reference to the accompanying drawings.

### 1. Structure of projector

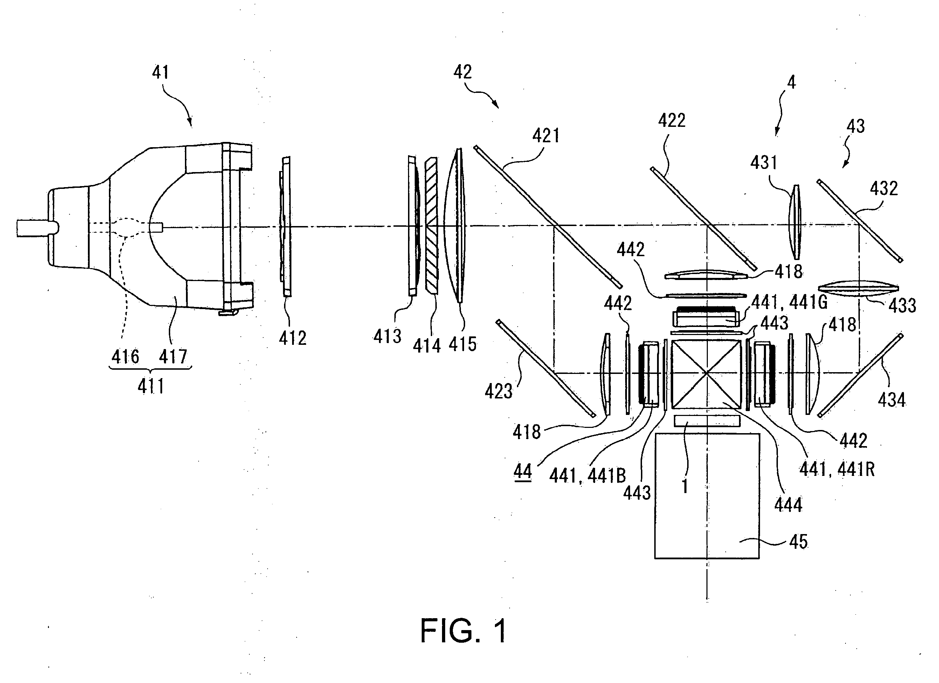

Fig. 1 shows an optical system of a projector according to an embodiment of the invention.

A projector 4 modulates light beams emitted from a light source device, according to image information, to form an optical image, and enlarges and projects the formed optical image.

As shown in Fig. 1, the projector 4 includes an integrator illuminating optical system 41, a color separating optical system 42, a relay optical system 43, an optical device 44 formed by integrally combining a light modulating device (liquid crystal panel) and a color combining optical system (cross dichroic prism), an optical part 1, and a projection lens 45.

Next, the structure of the optical part 1 will be described below in detail.

The integrator illuminating optical system 41 is an optical system for substantially illuminating an image forming region of a liquid crystal panel uniformly, which will be described later, forming the optical device 44. The integrator illuminating optical system 41 includes a light source device 411, a first lens array 412, a second lens array 413, a polarization converting element 414 and a superimposing lens 415.

The light source device 411 includes a light source lamp 416 for radially emitting light and a reflector 417 for reflecting the light emitted from the light source lamp 416.

The first lens array 412 is formed by arranging small lenses, each having a substantially rectangular contour as viewed from the optical axis direction, in a matrix. Each small lens divides the light beam emitted from the light source device 411 into a plurality of light beams.

The second lens array 413 have substantially the same structure as that of the first lens array 412. In other words, the second lens array 413 is formed by arranging small lenses in a matrix. The second lens array 413 has a function of focusing the light beams passing through the small lenses of the first lens array 412 on liquid crystal panel of the optical device 44, which will be described later, together with the superimposing lens 415.

The polarization converting element 414 is provided between the second lens array 413 and the superimposing lens 415 to substantially convert light from the second lens array 413 into one type of polarized light. More specifically, the partial light beams converted into one type of polarized light by the polarization converting element 414 are substantially superimposed to one another on the liquid crystal panel, which will be described later, of the optical device 44 by the superimposing lens 415. Since a projector including liquid crystal panels for modulating polarized light can use only one type of polarized light, the projector can utilize only about half the light beam emitted from the light source lamp 411 that randomly emits polarized light. Thus, the use of the polarization converting element 414 makes it possible to convert light emitted from the light source device 411 into one type of polarized light and thus to improve the utilization efficiency of light in the optical device 44.

The color separating optical system 42 includes two dichroic mirrors 421 and 422, and a reflecting mirror 423. A plurality of partial light beams emitted from the integrator illuminating optical system 41 are separated into three light beams of red (R), green (G), and blue (B) by the two dichroic mirrors 421 and 422.

The relay optical system 43 includes an incident-side lens 431, a relay lens 433, and reflecting mirrors 432 and 434. The relay optical system 43 has a function of guiding the red light separated by the color separating optical system 42 to a red liquid crystal panel, which will be described later, of the optical device 44.

At this time, the dichroic mirror 421 of the color separating optical system 42 transmits the green light beam and the red light beam of the light beams emitted from the integrator illuminating optical system 41, and reflects the blue light beam. The blue light beam reflected by the dichroic mirror 421 is reflected again from the reflecting mirror 423 to reach a blue liquid crystal panel, which will be described later, of the optical device 44 through a corresponding field lens 418. The field lens 418 converts the partial light beams emitted from the second lens array 413 into light beams that are collimated in a direction parallel to their central axes (main optical axes). The field lenses 418 arranged on the light incident-sides of green and red liquid crystal panels have the same function as that of the field lens 418.

Of the red and green light beams passing through the dichroic mirror 421, the green light beam is reflected by the dichroic mirror 422 to reach the green liquid crystal panel, which will be described later, of the optical device 44 through the corresponding field lens 418. Meanwhile, the red light beam passes through the dichroic mirror 422, the relay optical system 43, and the corresponding field lens 418 to reach the red liquid crystal panel, which will be described later, of the optical device 44.

The optical device 44 modulates an incident light beam according to image information to form a color image. The optical device 44 includes three incident-side polarizing plates 442 on which colored light beams separated by the color separating optical system 42 are incident, liquid crystal panels 441 (441R, 441G, and 441B) which are arranged in the subsequent stages of the incident-side polarizing plates 442, respectively, emission-side polarizing plates 443 which are arranged in the subsequent stages of the liquid crystal panels 441 (441R, 441G, and 441B), and a cross dichroic prism 444.

The liquid crystal panels 441 are of a transmissive type in which incident colored light is modulated on the basis of image information (not shown) input from the outside and the modulated light is emitted from a side opposite to the incident side.

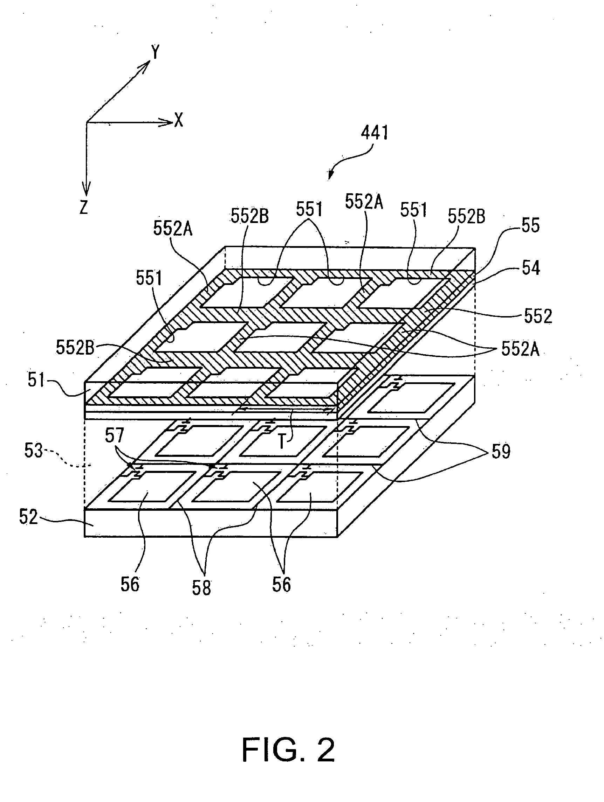

As shown in Fig. 2, each of the liquid crystal panels 441 includes two transparent substrates (a counter substrate 51 and a TFT substrate 52) formed of, for example, glass, and twisted nematic (TN) liquid crystal 53 injected between the two substrates.

The counter substrate 51 is provided with, for example, a common electrode 54 and a black matrix 55 for shielding unnecessary light.

The TFT substrate 52 is provided with, for example, a plurality of pixel electrodes 56 which are arranged in a matrix and thin film transistors (TFTs) 57, serving as switching elements. When a voltage is applied to the pixel electrodes 56 through the TFTs 57, the liquid crystal 53 interposed between the pixel electrodes 56 and the common electrode 54 provided on the counter substrate 51 is driven. In addition, a plurality of scanning lines 58 and a plurality of data lines 59 are arranged so as to intersect each other in a matrix on the TFT substrate 52, and the TFTs 57 are arranged at the intersections of the scanning lines and the data lines such that gates, sources, and drains thereof are respectively connected to the scanning lines 58, the data lines 59, and the pixel electrodes 56.

When a sequential selection voltage is applied to the scanning lines 58, the TFTs 57 in the X-axis direction are turned on in response to the voltage, and a driving voltage is written onto the pixel electrodes 56 through the TFTs. When a non-selection voltage is applied, the TFTs 57 are turned off, which causes the applied driving voltage to be stored in storage capacitors (not shown). That is, the liquid crystal panels 441 are of an active matrix driving type. In this structure, the black matrix 55 has a plurality of openings at positions corresponding to the pixel electrodes 56 of the TFT substrate 52, and the openings serve as transmissive portions 551. The transmissive portions 551 each have a substantially rectangular shape (in this embodiment, a substantially square shape) in plan view and arranged in a matrix. Portions other than the transmissive portions 551 serve as light shielding portions 552 which are arranged so as to cover portions other than the pixel electrodes 56 of the TFT substrate 52. The light shielding portions 552 are formed in a lattice shape in which a plurality of sides 552A and 552B intersect each other.

The incident-side polarizing plates 442 transmit light beams polarized in a predetermined direction among the light beams separated by the color separating optical system 42, and absorb the other light beams. For example, each incident-side polarizing plate 442 is formed by bonding a polarizing film on a substrate formed of, for example, sapphire glass.

The emission-side polarizing plates 443 are formed substantially in the same structure as that of the incident-side polarizing plates 442. That is, the emission-side polarizing plates 443 transmit light beams polarized in a predetermined direction among the light beams emitted from the liquid crystal panels 441 (441R, 441G, and 441B), and absorb the other light beams.

The incident-side polarizing plates 442 and the emission-side polarizing plates 443 are provided such that the polarizing axes thereof are perpendicular to each other.

The cross dichroic prism 444 combines the optical images obtained by modulating red, green, and blue colored light beams emitted from the emission-side polarizing plates 443 to form a color image.

In the cross dichroic prism 444, a dielectric multilayered film for reflecting red light and a dielectric multilayered film for reflecting blue light are arranged substantially in an X shape along interfaces among four right-angled prisms, and three colored light beams are combined by these dielectric multilayered films.

The projection lens 45 has a function of enlarging and projecting the optical image formed by the optical device 44.

### 2. Structure of optical part

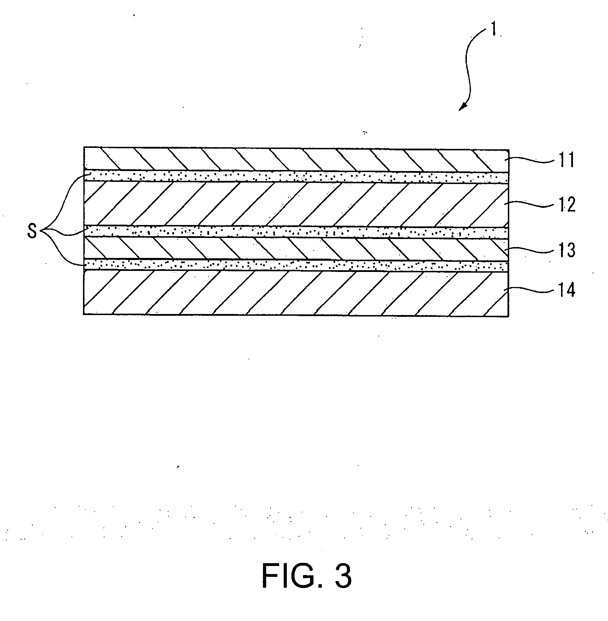

The optical part 1 will be described below with reference to Figs. 3 to 6.

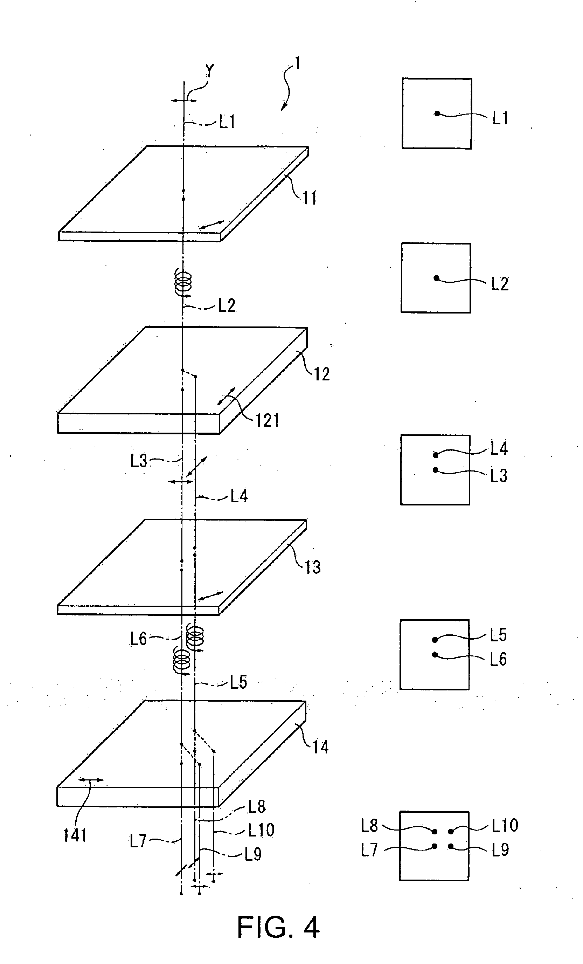

The optical part 1 shown in Figs. 3 and 4 has a function of preventing the image of the light shielding portion 552 of the black matrix 55 of each liquid crystal panel 441 from being projected on a projection image, and is provided on light emission sides of the liquid crystal panels 441. In this embodiment, the optical part 1 is provided between the cross dichroic prism 444 and the projection lens 45 on the light emission sides of the liquid crystal panels 441.

The optical part 1 includes a first retardation film 11 (a first optical element), a first birefringence plate 12, a second retardation film 13 (a second optical element), and a second birefringence plate 14 which are arranged in this order from the light incident side. These optical elements 11 to 14 are formed in substantially rectangular shapes in plan view, and have the same plan-view shape and the same size.

The first retardation film 11 converts linearly polarized light incident on the optical part 1 into circularly polarized light and serves as a quarter-wave plate. In this case, for example, a plastic film having a wavelength dispersion characteristic in which, as the wavelength of incident light becomes larger, a phase difference becomes larger may be used as the first retardation film 11. As the plastic film having such a characteristic, a uniaxial oriented polycarbonate film having a glass transition temperature of more than 200°C can be used.

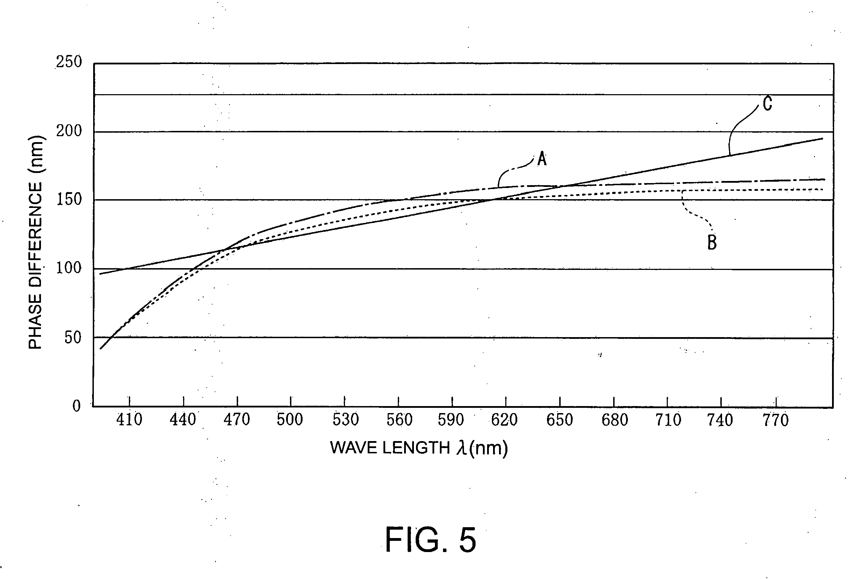

Fig. 5 is a graph illustrating the wavelength dispersion characteristic of the birefringence of the plastic film. In the graph, the horizontal axis indicates the wavelength (nm) of incident light, and the vertical axis indicates the wavelength (nm) of emission light. A solid straight line C indicates the wavelength of the quarter-wave plate with respect to the wavelength of the incident light, and represents an ideal phase difference when a phase difference of a quarter wavelength is given between a normal light beam and an abnormal light beam to convert linearly polarized light into circularly polarized light. A curved line A represented by a one-dotted chain line and a curved line B represented by a dashed line respectively indicate the wavelength dispersion characteristics of the birefringence of different types of plastic films. The plastic films have a wavelength dispersion characteristic in which, as the wavelength of incident light becomes larger in the range of a visible ray (400 to 800 nm), a phase difference becomes larger. The plastic film having the wavelength dispersion characteristic of birefringence represented by the curved line A or the curved line B can be used for the first retardation film 11.

The first birefringence plate 12 is arranged on the light emission side of the first retardation film 11 and separates light emitted from the first retardation film 11 into a normal light beam and an abnormal light beam. The first birefringence plate 12 has an optical axis aligned in a direction (a direction of arrow 121 in Fig. 4) in which the transmissive portions 551 of the black matrix 55 of the liquid crystal panel 441 are arranged, that is, along the sides 552A of the lattice-shaped light shielding portions 552 of the black matrix 55. In this embodiment, the first birefringence plate 12 has an optical axis extending in a direction perpendicular to a Y-axis on an incident surface.

It is preferable to use a crystal plate formed of, for example, quartz or lithium niobate (LiNbO₃) as the first birefringence plate 12. In particular, it is preferable to use lithium niobate as the first birefringence plate 12. The use of the crystal plate formed of lithium niobate makes it possible to reduce the thickness of a birefringence plate, compared with a structure in which a crystal plate formed of quartz is used. That is, when a birefringence plate formed of quartz and a birefringence plate formed of lithium niobate have the same separation width of light, the birefringence plate formed of lithium niobate has a smaller thickness than the birefringence plate formed of quartz.

The first birefringence plate 12 and the second birefringence plate 14, which will be described later, may be formed of a combination of quartz and lithium niobate, or they may be formed of crystal plates made of materials other than lithium niobate. For example, the first birefringence plate 12 and the second birefringence plate 14 may be formed of Chile saltpeter, calcite, rutile, KPD (KH₂PO₄), and APD (NH₄H₂PO₄).

The second retardation film 13 is arranged on the light emission side of the first birefringence plate 12 and has the same function as that of the first retardation film 11 (that is, a function of converting linearly polarized incident light into circularly polarized light). In addition, similar to the first retardation film 11, the second retardation film 13 is formed of a plastic film having a wavelength dispersion characteristic in which, as the wavelength of incident light becomes larger, a phase difference becomes larger. The plastic film can be formed of the same material as that used for the first retardation film 11.

The second birefringence plate 14 is arranged on the light emission side of the second retardation film 13 and separates light emitted from the second retardation film 13 into a normal light beam and an abnormal light beam. The second birefringence plate 14 is arranged such that an optical axis thereof is substantially perpendicular to the optical axis of the first birefringence plate 12. That is, the optical axis of the second birefringence plate 14 is arranged along sides 552B orthogonal to the sides 552A of the lattice-shaped light shielding portions 552 of the black matrix 55 (in a direction of arrow 141 in Fig. 4). In this embodiment, the second birefringence plate 14 has an optical axis extending in a direction parallel to the Y-axis on the incident surface. The second birefringence plate 14 can be formed of the same crystal plate as that used for the first birefringence plate 12.

In the above-mentioned structure, the optical part 1 includes the first retardation film 11, the first birefringence plate 12, the second retardation film 13, and the second birefringence plate 14. However, it is preferable that the optical part 1 further include an antireflection film. For example, the antireflection film (not shown) can be formed on the light incident side of the first retardation film 11 and on the light emission side of the second birefringence plate 14. The antireflection film can prevent the reflection of light beams forming an optical image from the optical part 1.

Light beams are reflected from the surface of the optical part 1 or interfaces between optical elements forming the optical part 1. The reflected light is incident on the optical device 44 (for example, the liquid crystal panels 441 and the cross dichroic prism 444), and is then reflected therefrom, which causes, for example, ghosting to occur in a projected image. In addition, the ghosting is perceived when reflectance of the optical part 1 (surface reflectance or reflectance at the interfaces between the optical elements forming the optical part 1) is higher than 5%.

Further, in the optical part 1, the first retardation film 11 is bonded to the first birefringence plate 12 by an acryl-based adhesive S. In addition, the first birefringence plate 12 is bonded to the second retardation film 13 by the acryl-based adhesive, and the second retardation film 13 is also bonded to the second birefringence plate 14 by the acryl-based adhesive S.

The acryl-based adhesive has a refractive index of more than 1.48, preferably, more than 1.54. The refractive index of the acryl-based adhesive S can be adjusted by adding an aromatic monomer to the adhesive S. Any of the following materials can be used as the aromatic monomer: 6-(4,6-dibromo-2-isopropylphenoxy)-1-hexyl acrylate, 6-(4,6-dibromo-2-sec-butylphenoxy)-1-hexyl acrylate, 2,6-dibromo-4-nonylphenyl acrylate, 2,6-dibromo-4-dodecylphenyl acrylate, 2-(1-naphthyloxy)-1-ethyl acrylate, 2-(2-naphthyloxy)-1-ethyl acrylate, 6-(1-naphthyloxy)-1-hexyl acrylate, 6-(2-naphthyloxy)-1-hexyl acrylate, 8-(1-naphthyloxy)-1-octyl acrylate, 8-(2-naphthyloxy)-1-octyl acrylate, and phenoxyethyl acrylate.

When the acryl-based adhesive S having a reflective index of 1.48 is used and the antireflection film having 0.6 percent reflectance is formed on the light-incident-side surface of the first retardation film 11 and the light-emission-side surface of the second birefringence plate 14, the reflectance of the optical part 1 is as follows.

When the antireflection film having 0.6 percent reflectance is formed on the light-incident-side surface of the first retardation film 11 (polycarbonate, refractive index: about 1.60), surface reflectance is approximately 0.6%. When the antireflection film having 0.6 percent reflectance is formed on the light-emission-side surface of the second birefringence plate 14 (quartz, refractive index: about 1.54), surface reflectance is approximately 0.6%. Although a detailed description is omitted, the total reflectance at the interfaces between the optical elements forming the optical part 1 is 3.65%.

That is, the reflectance of the optical part 1 is about 4.85% (that is, 0.6% + 3.65% + 0.6%), and thus is lower than 5%, which makes it possible to prevent the occurrence of the ghosting.

Further, as a difference between the refractive indexes of the optical elements forming the optical part 1 is smaller, the reflectance at the interfaces between the optical elements becomes smaller. Therefore, it is preferable that the refractive index of the acryl-based adhesive S be smaller than 1.48. It is more preferable that the acryl-based adhesive S have a refractive index larger than the refractive index, 1.54, of the birefringence plates 12 and 14 formed of quartz. However, preferably, the refractive index of the acryl-based adhesive S does not exceed the refractive index, 1.60, of the retardation films 11 and 13 formed of polycarbonate. When the refractive index of the acryl-based adhesive S exceeds 1.60, the reflectance at the interfaces increases.

In the above-mentioned optical part 1, incident light is separated as follows in order to prevent a projected image from being influenced by the image of the black matrix 55 of the liquid crystal panel 441. The separation of light will be described below with reference to Fig. 4. Fig. 4 is an exploded perspective view illustrating the optical part 1 and the separated state of light beams passing through the optical part 1.

Light emitted from the liquid crystal panel 441 through the cross dichroic prism 444 is linearly polarized light L1 that oscillates in a direction along the sides 552A of the lattice-shaped light shielding portions 552 of the black matrix 55 or in a direction along the sides 552B perpendicular to the sides 552A (in a direction of arrow Y in Fig. 4). The linearly polarized light L1 is incident on the first retardation film 11 to be converted into circularly polarized light L2.

The light L2 emitted from the first retardation film 11 is incident on the first birefringence plate 12. Then, the light L2 is separated into a normal light beam L3 and an abnormal light beam L4 by the first birefringence plate 12. The abnormal light beam L4 deviates along the optical axis of the first birefringence plate 12, that is, along the sides 552A of the lattice-shaped light shielding portions 552 of the black matrix 55. In addition, it is preferable that the deviation width (the separation width) between the normal light beam L3 and the abnormal light beam L4 be larger than one-third of an image pitch T (see Fig. 2) and smaller than two-thirds thereof.

The normal light beam L3 and the abnormal light beam L4, which are linearly polarized light beams, emitted from the first birefringence plate 12 are respectively converted into circularly polarized light beams L5 and L6 by the second retardation film 13. Then, the two light beams L5 and L6 emitted from the second retardation film 13 are incident on the second birefringence plate 14. In the second birefringence plate 14, the incident light beam L5 is separated into a normal light beam L7 and an abnormal light beam L9, and the incident light beam L6 is separated into a normal light beam L8 and an abnormal light beam L10. The abnormal light beams L9 and L10 deviate along the optical axis of the second birefringence plate 14, that is, along the sides 552B of the lattice-shaped light shielding portions 552 of the black matrix 55. In this way, the four separated light beams L7, L8, L9, and L10 are arranged at vertexes of a square or rectangle formed by the sides 552A and 552B of the lattice-shaped light shielding portion 552 forming the black matrix 55. Therefore, as shown in Fig. 6, an image G is projected onto an image formed by the light shielding portion 552 of the black matrix 55 through the projection lens 45, so that an image P of the light shielding portion 552 of the black matrix 55 disappears from the image G projected through the optical part 1.

Further, it is preferable that the deviation width (the separation width) between the normal light beams L7 and L8 and the abnormal light beams L9 and L10 in the second birefringence plate 14 be larger than one-third of the image pitch T (see Fig. 2) and smaller than two-thirds thereof.

### 3. Effects of the Invention

Accordingly, this embodiment can obtain the following effects.

(3-1) The linearly polarized light beam L1 emitted from the cross dichroic prism 444 is converted into the circularly polarized light beam L2 by the first retardation film 11. The circular polarization makes it possible for the first birefringence plate 12 having an optical axis aligned along the side 552A of the lattice-shaped light shielding portion 552 of the black matrix 55 to separate the light emitted from the cross dichroic prism 444 into the normal light beam L3 and the abnormal light beam L4. In this case, the normal light beam L3 and the abnormal light beam L4 are separated along the side 552A of the lattice-shaped light shielding portion 552 forming the black matrix 55. Then, the two separated light beams L3 and L4 are converted into the circularly polarized light beams L5 and L6 by the second retardation film 13, and the circularly polarized light beams L5 and L6 are separated by the second birefringence plate 14 having an optical axis orthogonal to that of the first birefringence plate 12. In this way, the two circularly polarized light beams L5 and L6 are separated in a direction orthogonal to the direction in which the light beams L3 and L4 are separated by the first birefringence plate 12, that is, along the side 552B perpendicular to the side 552A of the lattice-shaped light shielding portion 552 forming the black matrix 55.

Further, in this embodiment, the optical part 1 separates the light beam L1 emitted through the transmissive portions 551 of the black matrix 55 into the four light beams L7, L8, L9, and L10 along the sides 552A and 552B, which are orthogonal to each other, of the lattice-shaped light shielding portion 552 forming the black matrix 55. Therefore, the separated light beams L7, L8, L9, and L10 are arranged at vertexes of a square or rectangle formed by the sides 552A and 552B, which are orthogonal to each other, of the lattice-shaped light shielding portion 552 of the black matrix 55. In this way, the image G projected through the projection lens 45 overlaps as shown in Fig. 6, which makes it possible to improve the appearance of an image projected from the projector 4.

(3-2) In this embodiment, the retardation films 11 and 13 are used as optical elements for converting linearly polarized light into circularly polarized light, which makes it possible to reduce the size and weight of the optical part 1, as compared with a structure in which a crystal plate is formed of quartz.

Further, the retardation films 11 and 13 are composed of plastic films serving as optical elements for converting linearly polarized light into circularly polarized light, which makes it possible to reduce manufacturing costs of the optical part 1, as compared with the structure in which a crystal plate is formed of quartz.

(3-3) A method of providing a third birefringence plate in addition to two birefringence plates 101 and 102 can be suggested to perform square separation using an optical part 100 (see Fig. 10) having a conventional structure. However, in this case, since three birefringence plates are used, the thickness and weight of the optical part increases.

In contrast, according to this embodiment, since the optical part 1 includes two birefringence plates 12 and 14 and two retardation films 11 and 13, it is possible to reduce the thickness and weight of the optical part 1, as compared with the structure in which three birefringence plates are used.

(3-4) In this embodiment, the first retardation film 11 and the second retardation film 13 have wavelength dispersion characteristics in which, as the wavelength of incident light becomes larger, a phase difference becomes larger, which makes it possible to convert linearly polarized light, which is incident light, into circularly polarized light over a wide wavelength range.

(3-5) Further, in this embodiment, since the retardation films 11 and 13 and the birefringence plates 12 and 14 are bonded to each other by the acryl-based adhesive S, the adhesive S can absorb distortion caused by differences among linear expansion coefficients of the retardation films 11 and 13 and the birefringence plates 12 and 14, which makes it possible to obtain the optical part 1 having high durability.

Further, it is possible to prevent the transmittance of light passing through the optical part 1 from being lowered by bonding the retardation films 11 and 13 and the birefringence plates 12 and 14 using the acryl-based adhesive S.

(3-6) Furthermore, in this embodiment, the retardation films 11 and 13 and the birefringence plates 12 and 14 forming the optical part 1 are bonded to each other by the acryl-based adhesive S having a refractive index larger than 1.48. Therefore, it is possible to prevent light beams which are incident on the optical part 1 to form an optical image, from being reflected from the interfaces among the retardation films 11 and 13 and the birefringence plates 12 and 14. Thus, little reflected light is incident on the optical device 44 and is then reflected therefrom, which makes it possible to prevent ghosting from occurring in a projected image.

(3-7) Moreover, in this embodiment, the separation width between light beams in the first birefringence plate 12 and the second birefringence plate 14 of the optical part 1 is larger than one-third of the pitch between pixels of the liquid crystal panel 441 and smaller than two-thirds thereof, which makes it possible to reliably remove an image formed by the black matrix 55 from a projected image.

The invention is not limited to the above-described embodiment, but various modifications and changes of the invention can be made in the range capable of achieving the object of the invention.

In the above-described embodiment, the first retardation film 11, the first birefringence plate 12, the second retardation film 13, and the second birefringence plate 14 are formed to have the same plan-view shape and the same size, but the invention is not limited thereto. For example, in order to easily discriminate the light incident side and the light emission side of an optical part, the size of a second birefringence plate 24 positioned on the light emission side may be larger than the sizes of the first retardation film 11, the first birefringence plate 12, and the second retardation film 13, as in an optical part 2 shown in Fig. 7.

Further, as shown in Fig. 8, in order to easily discriminate the light incident side and the light emission side of an optical part, one of four corners of an optical part 3 may be cut out. In this case, for example, when a cut-out portion 31 is positioned on the upper left side of the optical part 3, the first retardation film 11 serves as a light-incident-side surface. In this way, it is possible to easily discriminate the light incident side and the light emission side of an optical part.

The structure for easily discriminating the light incident side and the light emission side of an optical part makes it possible to easily provide an optical part in a case of an optical apparatus, such as a projector.

Furthermore, in the above-described embodiment, the retardation films 11 and 13 have wavelength dispersion characteristics in which, as the wavelength of incident light becomes larger, a phase difference becomes larger. However, retardation films not having such wavelength dispersion characteristics may be used.

Moreover, in the above-described embodiment, the optical part includes the plastic retardation films 11 and 13 as optical elements for converting linearly polarized light into circularly polarized light, but the invention is not limited thereto. For example, in the optical part, quartz may be used as the optical elements for converting linearly polarized light into circularly polarized light. In addition, in the above-described embodiment, in the optical part 1, the acryl-based adhesive S is used for bonding the first retardation films 11 and 13 and the birefringence plates 12 and 14, but the type of adhesive S used is not limited thereto. For example, a silicon-based adhesive may be used. Further, instead of the adhesive, glue may be used for bonding the first retardation films 11 and 13 and the birefringence plates 12 and 14.

Furthermore, in the above-described embodiment, the optical part 1 is provided in the front-type projector 4 which projects images in a direction in which a viewer sees the screen, but the invention is not limited thereto. For example, the optical part may be provided in a rear-type projector which projects images in a direction opposite to the direction in which a viewer sees the screen.

Further, the optical part 1 can be provided in optical apparatuses other than the projector.

Furthermore, the projector 4 includes three liquid crystal panels 441, but the invention is not limited thereto. For example, the projector 4 may be provided with a single liquid crystal panel 441, two liquid crystal panels 441, or four or more liquid crystal panels 441.

Moreover, in the above-described embodiment, the liquid crystal panels 441 are of an active matrix driving type, but the invention is not limited thereto. For example, the liquid crystal panels 441 may be of a passive matrix driving type. In this case, the pixel electrodes and the common electrode may be changed to correspond to the driving type. In addition, in the above-described embodiment, three-terminal TFTs are used as switching elements, but the invention is not limited thereto. For example, two-terminal elements, such as MIMs, may be used as the switching elements.

The invention can be applied to an optical part mounted in an optical apparatus such as a projector.

## Claims

1. An optical part that is provided on a light emission side of a light modulating device,
the light modulating device including:
a pair of substrates which are opposite to each other;
liquid crystal which is injected between the substrates;
pixel electrodes which are arranged in a matrix on one of the pair of substrates opposite to each other; and
a black matrix that includes transmissive portions which are arranged on the other substrate so as to correspond to the pixel electrodes and lattice-shaped light shielding portions, each having sides substantially orthogonal to each other, which cover portions other than the pixel electrodes,
the optical part comprising:
a first optical element which converts linearly polarized light emitted from the light modulating device into circularly polarized light;
a first birefringence plate which has an optical axis arranged along one side of each of the lattice-shaped light shielding portions forming the black matrix of the light modulating device;
a second optical element which converts a normal light beam and an abnormal light beam emitted from the first birefringence plate into circularly polarized light beams; and
a second birefringence plate on which the light beams emitted from the second optical element are incident and which has an optical axis substantially orthogonal to that of the first birefringence plate,
wherein the first optical element, the first birefringence plate, the second optical element, and the second birefringence plate are arranged in this order on the light emission side of the light modulating device.

2. The optical part according to claim 1,
wherein the first optical element and the second optical element are plastic retardation films.

3. The optical part according to claim 2,
wherein the retardation films have a wavelength dispersion characteristic in which, as the wavelength of light incident on the retardation film becomes larger, a phase difference becomes larger.

4. The optical part according to claim 2,
wherein the retardation films and the birefringence plates are bonded to each other by an acryl-based adhesive.

5. The optical part according to claim 4,
wherein the refractive index of the acryl-based adhesive is larger than 1.48 and smaller than the refractive indexes of the retardation films.

6. A projector comprising:
a plurality of light modulating devices which modulate light beams emitted from a light source device, according to image information of each colored light, and each of which includes pixel electrodes arranged in a matrix and a black matrix that has transmissive portions arranged so as to correspond to the pixel electrodes and lattice-shaped light shielding portions, each having sides substantially orthogonal to each other, which cover portions other than the pixel electrodes;
a color combining optical device which combines the light beams modulated by the light modulating devices; and
a projection optical device which enlarges and projects a colored light combined by the color combining optical device to form a projected image,
wherein the optical part according to any one of the preceding claims is provided between the light modulating devices and the projection optical device.
